# FASCICULE DE BREVET EUROPEEN

(11) **EP 3 934 489 B1**
(45) Date de publication et mention de la délivrance du brevet: **07.06.2023**
(21) Numéro de dépôt: 20707143.2
(22) Date de dépôt: 05.03.2020
(51) Int. Cl.: A47J 19/02, A47J 19/06

(54) **DISPOSITIF D'EXTRACTION DU JUS DE FRUITS ET/OU DE LEGUMES**
VORRICHTUNG ZUM EXTRAHIEREN VON SAFT AUS FRÜCHTEN UND/ODER GEMÜSE
DEVICE FOR EXTRACTING JUICE FROM FRUITS AND/OR VEGETABLES

(30) Priorité: 06.03.2019 FR 1902270
(43) Date de publication de la demande: 12.01.2022
(73) Titulaire: Photo-Me Limited, Epsom, Surrey KT19 9AP (GB)
(72) Inventeur: BOURDELAIN, Laurent, décédé (FR)
(74) Mandataire: Cabinet Laurent & Charras
(86) Numéro de dépôt international: PCT/EP2020/055853
(87) Numéro de publication internationale: WO 2020/178386

(56) Documents cités:
- EP-A1- 3 005 912
- CN-B- 104 586 229
- KR-A- 20120 048 224
- KR-A- 20130 028 535
- US-A1- 2017 273 509

## Description

### DOMAINE DE L'INVENTION

L'invention concerne un dispositif d'extraction de jus de fruits ou de légumes, et plus spécifiquement, bien que de manière non exhaustive, de pommes, de poires, etc.

Ce dispositif a vocation à un usage domestique, mais est également susceptible d'être utilisé en libre-service.

### ETAT ANTERIEUR DE LA TECHNIQUE

Les dispositifs d'extraction de jus de fruits notamment, mais également de légumes, sont classiquement constitués d'un broyeur, destiné à découper le fruit en question et à réaliser une sorte de pulpe, ainsi que d'un organe de pressage, typiquement constitué d'une vis sans fin rotative à axe de rotation vertical ou horizontal, apte à extraire le jus de la pulpe ainsi constituée.

Plus précisément, un tel dispositif comporte un réceptacle ou bol apte à réceptionner les jus issus de l'organe de pressage, séparés de la vis de pressage par un filtre. Typiquement, la pulpe du fruit broyé est poussée par la vis sans fin mue en rotation vers la zone inférieure du dispositif, faisant fonction de filtre pour séparer le jus de la pulpe de fruits ou de légumes.

Si ce type de dispositif s'avère plus efficace que les autres dispositifs de l'art antérieur fonctionnant à l'aide de centrifugeuses, il présente cependant un certain nombre d'inconvénients, parmi lesquels on peut citer la nécessité de prévoir une vis sans fin à diamètre élevé, afin de pouvoir broyer un fruit entier. Ce faisant, ces dispositifs n'acceptent que des quartiers de fruits, préalablement découpés. Lorsque l'on souhaite traiter des fruits ou légumes entiers, le moteur actionnant la vis sans fin doit être doté d'un couple important, afin d'aboutir au broyage effectif d'un fruit entier, dont la cohésion interne peut être relativement importante, notamment en cas de pommes, de coings ou pommes de terre.

Par ailleurs, et s'agissant plus spécifiquement de la pomme, lors de l'arrêt de la rotation de la vis sans fin, la pomme en cours de broyage présente une surface de contact importante avec l'air, ce qui accélère le processus d'oxydation de la pomme, susceptible de rendre impropre à la consommation le jus obtenu après broyage et filtration.

Dans le cas plus spécifique d'un tel dispositif à usage de distribution automatique, c'est-à-dire en libre-service, les dispositifs de l'art antérieur se heurtent en outre à une double difficulté : la compacité du dispositif outre la capacité à nettoyer ses différents constituants de manière aisée.

Le document CN104586229B constitue l'état de la technique le plus proche de l'invention et divulgue le préambule de la revendication 1.

Il résulte également de la mise en oeuvre de ces dispositions de l'art antérieur un taux d'extraction de jus difficile à optimiser.

### DESCRIPTION SOMMAIRE DE L'INVENTION

L'objet de la présente invention vise à optimiser les dispositifs de l'art antérieur tout d'abord, en simplifiant l'opération de broyage et de pressage du fruit ou du légume et d'extraction du jus, ensuite, en facilitant les opérations de nettoyage des différents éléments constituant un tel dispositif et, enfin, en optimisant la compacité de tels dispositifs.

Selon un premier aspect de l'invention, et contrairement à l'art antérieur, les fruits ou légumes dont on cherche à extraire les jus ne sont pas broyés ou découpés mais râpés, facilitant d'une part l'opération de pressage nécessaire pour extraire les jus, et parallèlement permettant de diminuer le couple moteur de l'organe assurant le pressage effectif.

Par ailleurs, et là encore contrairement à l'art antérieur, ce n'est pas la vis sans fin, très classiquement mise en oeuvre, qui tourne, celle-ci demeurant fixe, mais c'est l'organe de déstructuration, et en l'espèce, la râpe, qui tourne, ainsi que le filtre associé.

Ces différentes structures et leur mode de solidarisation entre elles permettent de simplifier de manière importante le dispositif lui-même, mais également de permettre un nettoyage beaucoup plus aisé des différents éléments constitutifs.

Ainsi et selon l'invention, ce dispositif d'extraction du jus de fruits ou de légumes est du type comprenant :
▪ un bol, typiquement cylindrique ou tronconique, destiné à collecter le jus de fruits ou de légumes,
▪ un organe de déstructuration dudit fruit ou du légume, ce dernier étant notamment introduit entier au sein du dispositif de l'invention,
▪ un organe de pressage destiné à écraser les éléments du fruit ou du légume obtenu après déstructuration, afin d'en extraire le jus,
▪ et un organe de filtration destiné à séparer le jus des éléments provenant de la déstructuration du fruit ou du légume lors du pressage,

l'organe de déstructuration étant solidaire de l'organe de filtration, l'ensemble formé par ces deux organes constituant un tambour unique à symétrie de révolution, reçu au sein du bol.

### Selon l'invention :

▪ le tambour constitutif de l'organe de déstructuration et de filtration est actionné en rotation au moyen d'un moteur électrique ou manuellement, ledit tambour définissant en partie supérieure une zone fonctionnelle de déstructuration proprement dite, dont la face externe est destinée à venir en contact avec le fruit ou le légume dont on cherche à extraire le jus, et dont la partie inférieure est constituée d'une zone fonctionnelle faisant fonction de filtre,
▪ l'organe de pressage est constitué d'un noyau central monté fixe au sein du dispositif, ledit noyau présentant une symétrie de révolution, dont l'axe de révolution est confondu avec l'axe de rotation du tambour, la surface externe du noyau central définissant une vis sans fin définissant des canaux périphériques sensiblement hélicoïdaux, aptes à acheminer, en raison de la rotation dudit tambour, les éléments provenant de la déstructuration du fruit ou du légume en direction de la zone inférieure dudit tambour, et à presser lesdits éléments contre la zone inférieure du tambour de telle sorte à induire l'évacuation radiale du jus au travers du filtre et la collecte du jus dans le bol.

En d'autres termes, l'invention consiste non plus à broyer, mais à râper le fruit ou le légume dont on cherche à extraire le jus, ce râpage résultant de la rotation d'un tambour rotatif dont la partie supérieure définit typiquement une râpe, et donc percée classiquement d'orifices traversants, les filaments résultant de cette opération de râpage tombant dans le volume défini entre ledit tambour et la vis sans fin, ces filaments étant entraînés en raison de la rotation du tambour et de la forme particulière de la vis sans fin en direction de la zone inférieure du tambour faisant fonction de filtre, au niveau duquel un pressage effectif des filaments contre la paroi interne du tambour est réalisé en raison de la forme particulière de la vis sans fin, pour extraire le jus puis permettre la collecte effective dudit jus dans le bol associé. De fait, les fruits ou légumes ne sont pas introduits à l'intérieur de l'ensemble définit par le tambour et la vis sans fin, mais sont acheminés à l'extérieur dudit tambour, au niveau de la zone fonctionnelle de déstructuration. Ce faisant, aucune découpe préalable du fruit ou du légume en morceaux de dimension plus réduite ne s'avère nécessaire.

Par ailleurs, l'unicité de la pièce constituant à la fois râpe et filtre, en l'espèce, constituée du tambour, limite ainsi le nombre de pièces du dispositif. Ce tambour est fixé par encliquetage au niveau de l'arbre moteur électrique, et est donc très facilement escamotable hors de celui-ci en vue de favoriser son nettoyage.

Concomitamment, la vis sans fin, en l'espèce de forme tronconique, est également fixée et solidarisée par clipsage, vissage ou emboitement sur le bol en partie supérieure, de sorte que celle-ci peut être escamotée du dispositif en vue de permettre son nettoyage.

Selon une caractéristique de l'invention, le bol est associé avec une enceinte de réception des fruits ou légumes, cette enceinte étant munie d'au moins une lumière ou fenêtre traversante au niveau de laquelle le fruit ou le légume est destiné à entrer en contact avec la paroi supérieure et extérieure du tambour faisant fonction de râpe. Avantageusement, cette enceinte est munie d'un fond incliné en direction de ladite lumière, de telle sorte que le fruit ou le légume introduit dans l'enceinte a naturellement tendance, par simple gravité à venir en contact de la râpe.

Selon une autre caractéristique de l'invention, partie au moins de la face interne de la paroi latérale de l'enceinte située au voisinage de la lumière ou fenêtre traversante est munie de moyens de blocage du fruit ou du légume, typiquement constitués de rainures verticales faisant saillie en direction du volume défini par ladite enceinte, aptes en raison de la rotation du tambour, à venir coincer le fruit ou le légume contre la râpe, de telle sorte à optimiser l'opération de râpage.

### BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées.
La figure 1 est une représentation schématique en perspective du dispositif de l'invention ;
La figure 2 est une représentation schématique en section sagittale du dispositif de la figure 1 ;
La figure 3 est une vue schématique en éclaté du dispositif de la figure 1 ;
La figure 4 est une vue schématique du dessus du dispositif de la figure 1 ;
La figure 5 est une représentation schématique en perspective du tambour mis en oeuvre dans le dispositif de la figure 1 ;
La figure 6 est une représentation schématique en perspective partielle de la base du bol mis en oeuvre dans le dispositif de la figure 1 ;
La figure 7 est une représentation schématique en perspective partielle de la base inférieure du dispositif de la figure 1.

### DESCRIPTION DETAILLEE DE L'INVENTION

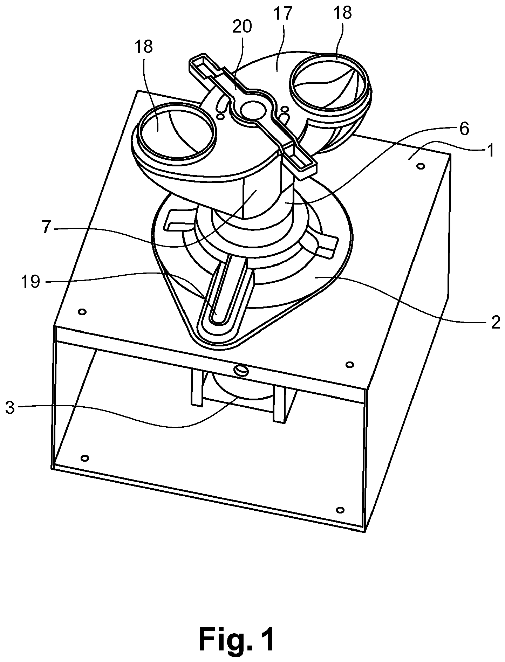

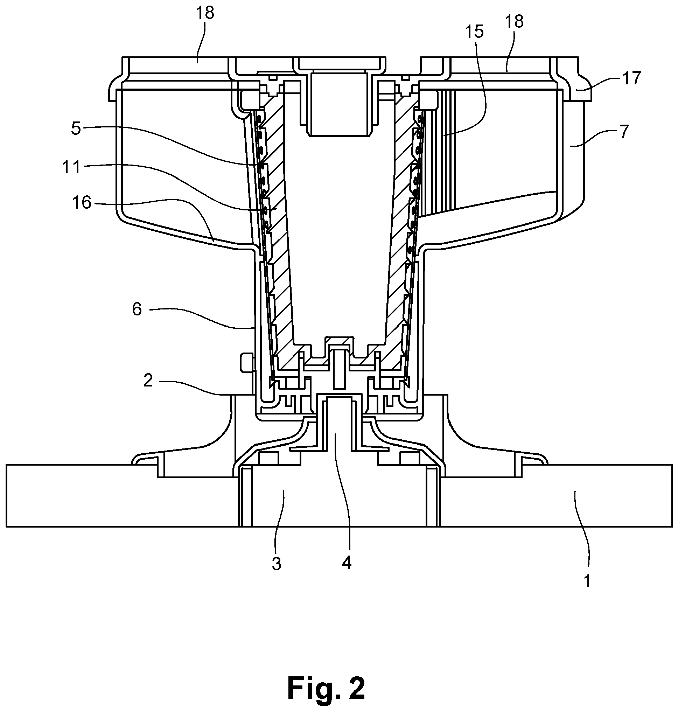

On a représenté en relation avec les figures 1 et 2, le dispositif d'extraction de jus de l'invention, respectivement en perspective et en vue en section sagittale.

Dans l'exemple décrit, ce dispositif est destiné à fonctionner en libre-service, de manière automatique. Le cas échéant, il peut être associé à un moyen de paiement du type mis en oeuvre au sein des distributeurs classiques de boissons ou autres. En l'espèce, le dispositif décrit est destiné à permettre la fabrication de jus de pommes à partir de pommes entières.

Fondamentalement, ce dispositif comporte une embase (1), intégrant un moteur électrique (3) de facture classique, dont l'axe vertical (4) émerge en direction du haut, d'un socle (2) destiné à recevoir de manière amovible un certain nombre d'éléments décrits ci-après.

Ce moteur (3) est destiné à entraîner en rotation un tambour (5), destiné à remplir plusieurs fonctions, ainsi que décrit ci-après.

Le socle (2) reçoit tout d'abord un bol (6) de collecte du jus, en l'espèce provenant d'une pomme entière, introduite au niveau d'une enceinte de réception supérieure (7). Cette enceinte (7) et le bol (6) sont avantageusement monobloc, et sont typiquement réalisés en matière plastique par moulage ou autre, par exemple en polycarbonate.

Le bol de collecte (6) du jus est en l'espèce de forme cylindrique, ou tronconique s'évasant vers le haut.

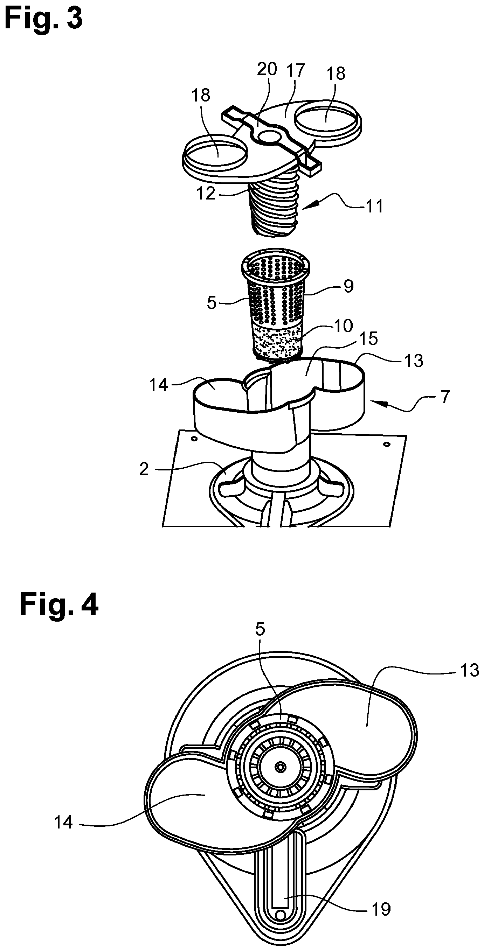

Selon une caractéristique de l'invention, la déstructuration du fruit, et en l'espèce de la pomme, est assurée au moyen de dents coupantes formant une râpe, tel que l'on peut bien l'observer sur la figure 3, qui dans les faits constitue la partie supérieure (9) du tambour (5).

Le tambour (5) est, dans l'exemple décrit, de forme sensiblement tronconique s'évasant vers le haut. Il est fixé réversiblement au niveau de l'arbre moteur (4) par emboîtement vertical sur un arbre cannelé, assurant sa rotation.

Comme on peut l'observer notamment sur les figures 2 et 3, le tambour rotatif (5) a comme axe de rotation, l'axe de symétrie de révolution du bol (6).

Selon encore une autre caractéristique de l'invention, la partie inférieure du tambour (5) définit un filtre (10), destiné à filtrer en zone inférieure du dispositif l'ensemble constitué par la déstructuration de la pomme et le jus en suite de l'opération de pressage contre la paroi interne dudit filtre sous l'action d'un noyau central (11) décrit ci-après.

Le tambour (5) présente donc deux zones distinctes, respectivement une zone supérieure (9) faisant fonction de râpe, et une zone inférieure (10) faisant fonction de filtre, ces deux zones étant en continuité l'une avec l'autre. Les zones actives du tambour ainsi définies sont typiquement réalisées en acier inoxydable. Ce faisant, elles sont aisément nettoyables. Ces zones différenciées sont typiquement obtenues par découpe, poinçonnage, formage et soudage.

Afin en premier lieu de permettre la progression des filaments résultant du râpage de la pomme en direction de la zone de pressage, c'est-à-dire, en zone inférieure du tambour (5), le dispositif comporte également un noyau central (11) fixe, c'est-à-dire non rotatif, présentant également une symétrie de révolution, dont l'axe de révolution est confondu avec l'axe de révolution du tambour (5), et dont la face externe définit une vis sans fin (12). L'enveloppe externe du noyau (11) est également de forme sensiblement tronconique s'évasant vers le haut, et configuré de telle sorte que la paroi latérale le définissant est sensiblement parallèle aux deux zones fonctionnelles (9) et (10) du tambour (5).

Le noyau (11) est, par exemple, fixé de manière amovible sur la partie supérieure de l'enceinte de réception (7), par exemple par vissage sur le couvercle supérieur (17) emboité sur l'enceinte de réception (7), tel qu'on peut par exemple l'observer sur la figure 3. Il est avantageusement réalisé en matière plastique, par exemple du polyimide thermoplastique par moulage par injection.

La vis sans fin (12) définie à la surface externe du noyau (11) permet, en raison de la rotation du tambour (5), en l'espèce dans le sens trigonométrique compte tenu de la forme de l'exemple décrit de l'enceinte de réception des fruits (7), d'acheminer les filaments issus du râpage de la pomme en direction de la zone inférieure du dispositif.

Plus précisément, la vitesse de progression desdits filaments en direction de la zone inférieure du dispositif est déterminée par la vis sans fin, et notamment par le pas et la profondeur des dents de l'hélice définie par ladite vis sans fin. Ainsi, en partie supérieure du noyau (11), le débit imprimé par la vis sans fin est déterminé pour être supérieur au débit de production des filaments par la râpe (9), ceci afin de déplacer les filaments résultant du râpage en direction de la partie inférieure tout en évitant leur pressage. En revanche, en partie inférieure, le débit imprimé par la vis sans fin se réduit, ceci afin de réaliser le pressage des filaments contre la zone de filtration (10) du tambour (5). A titre exemplatif, la vis sans fin (12) est constituée de deux hélices d'un pas de 90 millimètres et d'une profondeur de 8 millimètres en partie supérieure. Le pas se réduit à 50 millimètres et la profondeur des hélices se réduit progressivement à 4 millimètres en partie inférieure du dispositif.

Lorsque lesdits filaments aboutissent au niveau de la zone inférieure du dispositif, et typiquement à l'aplomb du bol (6), la coopération du noyau (11) avec la paroi interne du tambour (5) au niveau de la zone de filtration (10) de ce dernier, engendre le pressage desdits filaments et corollairement l'extraction du jus, qui peut traverser le filtre et être collecté dans le bol (6).

Selon une caractéristique de l'invention, l'enceinte de réception des fruits (7) présente, en l'espèce, deux lobes (13, 14) en forme de volute spiralée, centrés sur l'axe de symétrie de révolution des autres éléments constitutifs du dispositif. Ces deux volutes aboutissent au niveau de la zone supérieure (9) du tambour, au niveau de laquelle elles débouchent chacune par une fenêtre traversante, de telle sorte à permettre la coopération de la pomme à ce niveau avec la zone fonctionnelle de râpe dudit tambour. Dans l'exemple décrit, en raison de la présence de deux lobes, le dispositif peut traiter deux pommes simultanément.

Par ailleurs, partie de la paroi interne desdites volutes (13, 14) est munie de rainures verticales en saillie (15), induisant, en raison de la rotation du tambour (5), le coincement de la pomme et son appui contre la zone supérieure (9) du tambour formant râpe, et ce, de manière automatique. De plus, et comme on peut bien l'observer sur la figure 2, la base inférieure ou fond (16) de l'enceinte de réception (7) est inclinée en direction du tambour (5).

Ce faisant, on évite ainsi toute nécessité d'une action manuelle quelconque ou d'un poussoir additionnel afin d'aboutir à la déstructuration de la pomme et la production de jus dans des conditions de sécurité optimum, puisqu'aussi bien, l'opérateur n'a plus besoin d'introduire sa main à l'intérieur de l'enceinte de réception de la pomme, la simple gravité, la forme particulière de l'enceinte de réception (7) et la présence des rainures ou stries verticales (15) induisant automatiquement le positionnement correct du fruit au contact de la râpe (9).

Avantageusement, et afin d'optimiser la sécurité, le dispositif de l'invention comporte un couvercle supérieur (17), coiffant l'intégralité de l'enceinte de réception (7), à l'exception toutefois de zones (18) permettant l'introduction du fruit dans l'enceinte (7), mais situées à distance de la zone fonctionnelle ou râpe (9) du tambour (5). Le couvercle est maintenu fixé sur l'enceinte de réception (7) à l'aide d'un verrou rotatif (20), qui vient prendre en sandwich l'enceinte (7) et le couvercle (17). Ce verrou permet le démontage rapide et sans outil du couvercle (17), du tambour (5) et de l'ensemble monobloc enceinte (7) et bol (6), permettant un nettoyage facilité.

En raison du mode de solidarisation du tambour (5), du noyau (11) et de l'ensemble constituant l'enceinte de réception (7) et le bol (6) sur le socle (2), il devient très aisé de procéder à leur escamotage et corollairement à leur nettoyage.

Par ailleurs, en raison du volume tout particulièrement réduit séparant la surface externe du noyau (11) et la paroi interne du tambour (5), la surface des filaments d'une pomme résultant du râpage susceptible d'être en contact avec l'air est également réduite, diminuant de fait l'oxydation de ces filaments en cas d'interruption du processus de pressage.

Selon une caractéristique avantageuse de l'invention, la base inférieure du bol (6) définit une goulotte (21) circulaire et inclinée, qui communique par un orifice (22) aménagé dans ladite goulotte avec un organe de récupération et de canalisation (19) du jus en direction par exemple d'une zone recevant un gobelet.

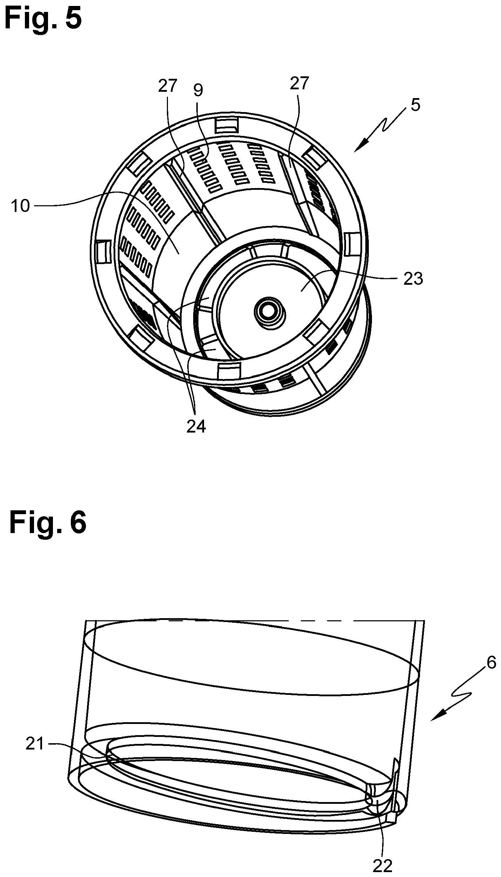

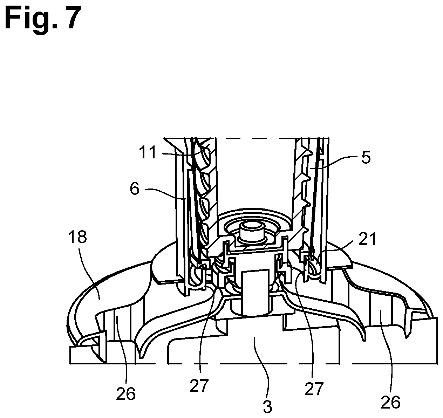

Selon une autre caractéristique avantageuse de l'invention, le flasque inférieur (23) du tambour (5) est ménagé d'orifices traversants (24) afin d'évacuer la pulpe du fruit dont a été extrait le jus (voir figure 5). La pulpe, toujours poussée par la vis sans fin (12) poursuit son trajet au travers de deux autres trous (25) réalisés en partie inférieure et centrale du bol (6) (voir figure 7), afin d'être évacuée vers l'extérieur du bol, puis collectée par deux goulottes (26) la conduisant dans des bacs de récupération.

Avantageusement, l'orifice d'évacuation du jus (22) et les orifices d'évacuation de la pulpe (25) réalisés dans le fond du bol (6) sont séparés par des cloisons issues du bol et du flasque inférieur du tambour, format chicane, afin de ne pas mélanger le jus et la pulpe pendant le phase d'évacuation du jus et de la pulpe.

Par ailleurs, et afin d'aboutir à un meilleur entrainement en rotation du fruit déstructuré, le tambour (5) est muni sur sa paroi interne de nervures radiales en saillie (27), tel qu'on peut bien l'observer sur la figure 5.

On conçoit tout l'intérêt du dispositif de l'invention qui permet, tout d'abord en raison de sa structure relativement simple, d'optimiser l'extraction des jus de fruits et de légumes, notamment du type pommes, poires, coings, etc... voire pommes de terre, tout particulièrement en libre-service, en raison de la grande facilité de nettoyage des différents éléments constitutifs, et plus particulièrement, du noyau central à surface externe en forme de vis sans fin, du tambour assurant une double fonction, respectivement de râpe et de filtre, et enfin, du bol avantageusement monobloc avec l'enceinte de réception des fruits entiers. Il permet en outre de traiter des fruits ou légumes entiers, sans nécessité de quelconque découpe préalable en morceaux de taille plus réduite.

## Revendications

1. Dispositif d'extraction du jus de fruits ou de légumes entiers, comprenant :
▪ un bol (6) destiné à collecter le jus de fruits ou de légumes,
▪ un organe de déstructuration (5, 9) dudit fruit ou dudit légume, ce dernier étant notamment introduit entier au sein dudit dispositif,
▪ un organe de pressage (5, 10, 11) destiné à écraser les éléments du fruit ou légume obtenu après déstructuration, afin d'en extraire le jus,
▪ et un organe de filtration (5, 10) destiné à séparer le jus des éléments provenant de la déstructuration du fruit ou du légume lors du pressage,
l'organe de déstructuration étant solidaire de l'organe de filtration, l'ensemble formé par ces deux organes constituant un tambour unique (5) à symétrie de révolution, reçu au sein du bol,
***caractérisé :***
▪ en ce que le tambour (5) est actionné en rotation, ledit tambour (5) définissant en partie supérieure une zone fonctionnelle (9) de déstructuration proprement dite, dont la face externe est destinée à venir en contact avec le fruit ou le légume dont on cherche à extraire le jus, et dont la partie inférieure est constituée d'une zone fonctionnelle (10) faisant fonction de filtre,
▪ en ce que l'organe de pressage est constitué d'un noyau central (11) monté fixe au sein du dispositif, ledit noyau central (11) présentant une symétrie de révolution, dont l'axe de révolution est confondu avec l'axe de rotation du tambour (5), la surface externe du noyau central (11) définissant une vis sans fin (12) délimitant des canaux périphériques sensiblement hélicoïdaux, aptes à acheminer, en raison de la rotation dudit tambour (5), les éléments provenant de la déstructuration du fruit ou du légume en direction de la zone inférieure du tambour, et à presser lesdits éléments contre la zone fonctionnelle (10) du tambour (5) de telle sorte à induire l'évacuation radiale du jus au travers de la zone fonctionnelle (10) faisant fonction de filtre et la collecte du jus dans le bol (6).

2. Dispositif d'extraction du jus de fruits ou de légumes entiers selon la revendication 1, dans lequel l'organe de déstructuration est constitué de dents coupantes formant une râpe définissant la zone fonctionnelle (9) du tambour (5).

3. Dispositif d'extraction du jus de fruits ou de légumes entiers selon l'une des revendications 1 et 2, dans lequel le tambour (5) est muni sur sa paroi interne de nervures (27) aptes à assurer un entrainement en rotation optimisé du fruit ou du légume déstructuré.

4. Dispositif d'extraction du jus de fruits ou de légumes entiers selon l'une des revendications 1 à 3, ***caractérisé* en ce que** le dispositif comporte un socle (2) au niveau duquel le tambour (5) et le bol (6) sont fixés réversiblement.

5. Dispositif d'extraction du jus de fruits ou de légumes entiers selon l'une des revendications 1 à 4, ***caractérisé* en ce qu'**il comprend également une enceinte de réception (7) des fruits ou légumes dont on cherche à extraire le jus, ladite enceinte étant munie d'au moins une lumière ou fenêtre traversante au niveau de laquelle le fruit ou le légume est destiné à entrer en contact avec la zone fonctionnelle (9) de déstructuration du tambour (5).

6. Dispositif d'extraction du jus de fruits ou de légumes entiers selon la revendication *5,* ***caractérisé* en ce que** l'enceinte de réception (7) et le bol (6) forment un ensemble monobloc.

7. Dispositif d'extraction du jus de fruits ou de légumes entiers selon l'une des revendications 5 et 6, ***caractérisé* en ce que** l'enceinte de réception (7) est munie d'un fond (16) incliné en direction de ladite lumière ou fenêtre traversante.

8. Dispositif d'extraction du jus de fruits ou de légumes entiers selon l'une des revendications 5 à 7, ***caractérisé* en ce que** partie au moins de la face interne de la paroi latérale de l'enceinte de réception (7) située au voisinage de la lumière ou fenêtre traversante est munie de moyens de blocage du fruit ou du légume, typiquement constitués de rainures verticales (15) en saillie en direction de l'intérieur de l'enceinte.

9. Dispositif d'extraction du jus de fruits ou de légumes entiers selon l'une des revendications 5 à 8, ***caractérisé* en ce que** l'enceinte de réception (7) présente au moins un lobe (13, 14) en forme de volute spiralée, centré sur l'axe de symétrie de révolution du tambour (5) et du noyau (11), lesdites volutes aboutissant au niveau de la zone fonctionnelle (9) du tambour (5), au niveau de laquelle elles débouchent chacune par une lumière ou fenêtre traversante.

10. Dispositif d'extraction du jus de fruits ou de légumes entiers selon l'une des revendications 5 à 9, ***caractérisé* en ce qu'**il comporte un couvercle supérieur (17), coiffant l'intégralité de l'enceinte de réception (7), à l'exception toutefois de zones (18) permettant l'introduction du fruit dans l'enceinte (7), mais situées à distance de la zone fonctionnelle (9) du tambour (5).

11. Dispositif d'extraction du jus de fruits ou de légumes entiers selon l'une des revendications 1 à 10, ***caractérisé* en ce que** la vis sans fin (12) ménagée à la périphérie du noyau central (11) définit deux hélices, dont le pas et la profondeur diminuent de la zone supérieure vers la zone inférieure du dispositif.

12. Dispositif d'extraction du jus de fruits ou de légumes entiers selon l'une des revendications 1 à 11, ***caractérisé* en ce que** le tambour (5) est actionné en rotation au moyen d'un moteur électrique (3) ou par un autre moyen, notamment manuel.

## Patentansprüche

1. Vorrichtung zum Extrahieren von Saft aus ganzen Früchten oder Gemüse, die enthält:
▪ einen Behälter (6) zum Auffangen des Obst- oder Gemüsesaftes,
▪ ein Aufbrechelement (5, 9) für diese Frucht oder dieses Gemüses, wobei insbesondere das Letztgenannte ganz in diese Vorrichtung gegeben wird,
▪ ein Presselement (5, 10, 11), vorgesehen zum Quetschen der Einzelteile des Obstes oder Gemüses nach dem Aufbrechen, um den Saft zu extrahieren,
▪ und ein Filterelement (5, 10) zum Trennen des Saftes von den Teilchen, die aus dem Aufbrechen des Obstes oder des Gemüses beim Pressen stammen.
die Aufbrechvorrichtung ist fest mit dem Filterelement verbunden, die Einheit aus diesen beiden Elementen bildet eine einzige, drehsymmetrische Trommel (5), untergebracht innerhalb des Behälters,
***dadurch gekennzeichnet, dass:***
▪ die Trommel (5) in Drehung angetrieben wird, diese Trommel (5) definiert dabei im oberen Teil, eine funktionelle Aufbrechzone (9) im eigentlichen Sinne, dessen Außenseite dazu vorgesehen ist, in Kontakt mit dem Obst oder dem Gemüse zu kommen, dessen Saft extrahiert werden soll und dessen unterer Teil aus einer funktionellen Zone (10) besteht, die als Filter dient,
▪ das Presselement aus einem zentralen Kern (11) besteht, der fest innerhalb der Vorrichtung montiert ist, dieser zentrale Kern (11) weist eine Drehsymmetrie auf, deren Drehachse mit der Drehachse der Trommel (5) zusammenfällt, die Außenfläche des zentralen Kerns (11) definiert ein Schneckengetriebe (12), das im Wesentlichen schraubenförmige Kanäle an der Peripherie definiert, die in der Lage sind, aufgrund der Rotation dieser Trommel (5), die Teilchen aus dem Aufbrechen des Obstes oder des Gemüses in Richtung der unteren Zone der Trommel zu leiten, und diese Teilchen gegen die funktionelle Zone (10) der Trommel (5) zu pressen, was zu einer radialen Ableitung des Saftes durch die funktionelle Zone (10), die als Filter dient, hindurch, und zum Auffangen des Saftes im Behälter (6) führt

2. Vorrichtung zum Extrahieren von Saft aus ganzen Früchten oder Gemüse, nach Anspruch 1, bei der die Aufbrechvorrichtung aus scharfen Zähnen besteht, die eine Reibe bilden, die die la funktionelle Zone (9) der Trommel (5) definiert.

3. Vorrichtung zum Extrahieren von Saft aus ganzen Früchten oder Gemüse, nach einem der Ansprüche 1 und 2, bei der die Trommel (5) auf ihrer Innenseite über Rippen (27) verfügt, die eine optimierte Rotation des aufgebrochenen Obstes oder Gemüses sicherstellen können.

4. Vorrichtung zum Extrahieren von Saft aus ganzen Früchten oder Gemüse, nach einem der Ansprüche 1 bis 3, ***dadurch gekennzeichnet, dass*** die Vorrichtung einen Sockel (2) umfasst, auf dem die Trommel (5) und der Behälter (6) abnehmbar befestigt sind.

5. Vorrichtung zum Extrahieren von Saft aus ganzen Früchten oder Gemüse, nach einem der Ansprüche 1 bis 4, ***dadurch gekennzeichnet, dass*** sie außerdem einen Aufnahmebehälter (7) für das Obst oder Gemüse enthält, dessen Saft extrahiert werden soll, dieser Behälter verfügt über mindestens eine durchführende Öffnung oder Fenster, wo das Obst oder Gemüse in Kontakt mit der funktionellen Aufbrechzone (9) der Trommel (5) kommen soll.

6. Vorrichtung zum Extrahieren von Saft aus ganzen Früchten oder Gemüse, nach Anspruch 5, ***dadurch gekennzeichnet, dass*** der Aufnahmebehälter (7) und der Behälter (6) ein einteiliges Ganzes bilden.

7. Vorrichtung zum Extrahieren von Saft aus ganzen Früchten oder Gemüse, nach einem der Ansprüche 5 und 6, ***dadurch gekennzeichnet, dass*** der Aufnahmebehälter (7) einen Boden (16) hat, der in Richtung dieser durchführenden Öffnung oder des Fensters geneigt ist.

8. Vorrichtung zum Extrahieren von Saft aus ganzen Früchten oder Gemüse, nach einem der Ansprüche 5 bis 7, ***dadurch gekennzeichnet, dass*** mindestens ein Teil der Innenseite der Seitenwand des Aufnahmebehälters (7), der sich in der Nähe der durchführenden Öffnung oder des Fensters befindet, mit Mitteln zum Zurückhalten des Obstes oder des Gemüses ausgestattet ist, bei denen es sich typischerweise um vertikale Rillen (15) handelt, die in Richtung des Inneren des Behälters vorragen.

9. Vorrichtung zum Extrahieren von Saft aus ganzen Früchten oder Gemüse, nach einem der Ansprüche 5 bis 8, ***dadurch gekennzeichnet, dass*** der Aufnahmebehälter (7) mindestens eine Ausbuchtung (13, 14) enthält, spiralförmig, zentriert auf die Drehsymmetrieachse der Trommel (5) und des Kerns (11), diese Spiralen führen bis in Höhe der funktionellen Zone (9) der Trommel (5), in deren Höhe sie in einer durchführenden Öffnung oder Fenster münden.

10. Vorrichtung zum Extrahieren von Saft aus ganzen Früchten oder Gemüse, nach einem der Ansprüche 5 bis 9, ***dadurch gekennzeichnet, dass*** sie einen oberen Deckel (17) enthält, die den gesamten Aufnahmebehälter (7) abdeckt, jedoch mit Ausnahme der Zonen (18), was das Einführen der Frucht in den Behälter (7) ermöglicht, aber in gewisser Entfernung von der funktionellen Zone (9) der Trommel (5).

11. Vorrichtung zum Extrahieren von Saft aus ganzen Früchten oder Gemüse, nach einem der Ansprüche 1 bis 10, ***dadurch gekennzeichnet, dass*** das Schneckengetriebe (12), das an der Peripherie des zentralen Kerns (11) ausgespart ist, zwei Schrauben definiert, deren Steigung und Tiefe sich von der oberen Zone zur unteren Zone der Vorrichtung verringern.

12. Vorrichtung zum Extrahieren von Saft aus ganzen Früchten oder Gemüse, nach einem der Ansprüche 1 bis 11, ***dadurch gekennzeichnet, dass*** die Trommel (5) drehbar angetrieben wird mittels eines Elektromotors (3) oder durch ein anderes Mittel, insbesondere manuell.

## Claims

1. Device for extracting juice from whole fruit or vegetables, comprising:
▪ a bowl (6) intended to collect the juice of fruit or of vegetables,
▪ a member for destructing (5, 9) said fruit or said vegetable, the latter being in particular introduced whole into said device,
▪ a pressing member (5, 10, 11) intended to crush the elements of the fruit or vegetable obtained after the destructuring, to extract the juice therefrom,
▪ and a filtering member (5, 10) intended to separate the juice from the elements resulting from the destructuring of the fruit or of the vegetable during the pressing,
the destructuring member being secured to the filtering member, the assembly forming by these two members forming a single drum (5) with a symmetry of revolution, received within the bowl,
***characterized:***
▪ in that the drum (5) is rotated, said drum (5) defining in its top portion an actual functional destructuring area (9), having its outer surface intended to come into contact with the fruit or the vegetable, having its juice desired to be extracted, and having its bottom portion formed of a functional area (10) operating as a filter,
▪ in that the pressing member is formed of a central core (11) fixedly mounted within the device, said central core (11) having a symmetry of revolution, having its revolution axis confounded with the rotation axis of the drum (5), the outer surface of the central core (11) defining a worm screw (12) delimiting substantially helical peripheral channels, suitable for conveying, due to the rotation of said drum (5), the elements resulting from the destructuring of the fruit or of the vegetable into the bottom portion of said drum, and for pressing said elements against the functional area (10) of the drum (5) in such a way as to induce the radial discharging of the juice through the functional area (10) operating as a filter and the collection of the juice in the bowl (6).

2. Device for extracting juice from whole fruit or vegetables according to claim 1, wherein the destructuring member is formed of cutting teeth forming a grater defining the functional area (9) of the drum (5).

3. Device for extracting juice from whole fruit or vegetables according to claim 1 and 2, wherein the drum (5) is provided on its inner wall with ribs (27) capable of rotating in optimized fashion the destructured fruit or vegetable.

4. Device for extracting juice from whole fruit or vegetables according to claim 1 to 3, ***characterized* in that** the device comprises a base (2) at the level of which the drum (5) and the bowl (6) are reversibly attached.

5. Device for extracting juice from whole fruit or vegetables according to claim 1 to 4, ***characterized* in that** it also comprises an enclosure for receiving (7) the fruit or vegetables having their juice desired to be extracted, said enclosure being provided with at least one port or through window at the level of which the fruit or the vegetable is intended to come into contact with the functional destructuring area (9) of the drum (5).

6. Device for extracting juice from whole fruit or vegetables according to claim 5, ***characterized* in that** the receiving enclosure (7) and the bowl (6) form a one-piece assembly.

7. Device for extracting juice from whole fruit or vegetables according to any of claims 5 and 6, ***characterized* in that** the receiving enclosure (7) is provided with a bottom (16) inclined towards said port or through window.

8. Device for extracting juice from whole fruit or vegetables according to any of claims 5 to 7, ***characterized* in that** a portion at least of the inner surface of the lateral wall of the receiving enclosure (7) located in the vicinity of the port or through window is provided with means for blocking the fruit or the vegetable, typically formed of vertical grooves (15) protruding towards the inside of the enclosure.

9. Device for extracting juice from whole fruit or vegetables according to any of claims 5 to 8, ***characterized* in that** the receiving enclosure (7) has at least one lobe (13, 14) in the shape of a coiled volute, centered on the axis of symmetry of revolution of the drum (5) and of the core (11), said volutes reaching the level of the functional area (9) of the drum (5), at the level of which they each emerge through a port or through window.

10. Device for extracting juice from whole fruit or vegetables according to any of claims 5 to 9, ***characterized* in that** it comprises an upper cover (17) entirely covering the receiving enclosure (7), except however for areas (18) enabling to introduce the fruit into the enclosure (7), but located at a distance from the functional area or grater (9) of the drum (5).

11. Device for extracting juice from whole fruit or vegetables according to any of claims 5 to 10, ***characterized* in that** the worm screw (12) formed at the periphery of the central core (11) defines two helixes, having their pitch and their depth decreasing from the top area to the bottom area of the device.

12. Device for extracting juice from whole fruit or vegetables according to any of claims 5 to 11, ***characterized* in that** the drum (5) is rotated by means of an electric motor (3) or by other means, particularly manual.
